# EUROPEAN PATENT SPECIFICATION

(11) **EP 1 373 742 B1**
(45) Date of publication and mention of the grant of the patent: **15.12.2004**
(21) Application number: 02759776.4
(22) Date of filing: 22.03.2002
(51) Int. Cl.: F16B 37/06, F16B 19/00

(54) **BLIND RIVET NUT WITH IMPROVED SEAL RETENTION**
BLINDNIETMUTTER MIT VERBESSERTER DICHTUNGSHALTERUNG
ECROU A RIVET AVEUGLE A RETENUE DE JOINT AMELIOREE

(30) Priority: 28.03.2001 GB 0107664
(43) Date of publication of application: 02.01.2004
(73) Proprietor: Newfrey LLC, Newark, Delaware 19711 (US)
(72) Inventor: SMITH, Daniel Robin, Birmingham B369DG (GB)
(74) Representative: Haar, Lucas H., Dipl.-Ing.
(86) International application number: PCT/EP2002/003219
(87) International publication number: WO 2002/081936

(56) References cited:
- EP-A- 0 589 144
- EP-A- 0 634 582
- FR-A- 2 569 792
- GB-A- 1 028 728
- US-A- 4 647 264

## Description

The present invention relates to rivet nuts, and in particular to blind rivet nuts and more in particular, to blind rivet nuts having a peripheral seal.

A blind rivet nut comprises an elongate body having a uniformed cross-sectional shape along the length of the body and a flange formed at one end of the body which extends radially outwards from the end of the body perpendicularly from the longitudinal axis of the body. The cross-sectional shape of the body perpendicular to the longitudinal axis of the body is that of a hexagon. A bore of circular cross section is formed through the flange and passes through the majority of the length of the body. The bore comprises two sections, a first section which is co-axial with the longitudinal axis of the body and which extends from the flange part way through the length of the body and a second section which has a smaller diameter to that of the first section and which is co-axial to the first section and extends from the end of the first section through the majority of the remaining body. The end of the bore remote from the flange is sealed to form the "blind" rivet nut The bore is threaded along the second section so that a mandrel of a setting tool for a blind rivet nut can be threaded into the second section of the bore to secure it to the blind rivet nut.

Blind rivet nuts can be used to secure a number of workpieces together. Holes are formed or drifted through the workpieces which are to be attached to each other. These are then aligned so that the body of the rivet nut can pass through the holes of all the workpieces. The mandrel of a setting tool is then engagingly threaded onto the thread formed within the second section of the bore and the setting tool sets the blind rivet nut by pulling the mandrel which is turn pulls the end part of the body remote from the flange towards the flange causing the walls of the body of the blind rivet nut located adjacent the side of the workpiece facing away from the mandrel setting tool to bulge radially outwardly and thus secure the workpieces together by sandwiching them between the underside of the flange on one side and the radially enlarged bulge formed on the other side by the setting tool. The mandrel this then unthreaded from the bore and removed leaving the rivet nut located within the workpieces to secure the workpieces together.

Blind rivet nuts are often used on thin sheets of material in order to provide a threaded socket to which items can be secured. This can be in addition to the blind rivet nut being used to secure second and third thin sheets of material to the first. One example of such a use is in the application of a roof rack to the roof of an automobile. Construction of the roof of a vehicle comprises multiple layers of thin sheets of metal. An array of blind rivet nuts are mounted in various positions in the roof of a vehicle which are then used to secure the roof rack to the roof. The roof rack is secured to the blind rivet nut by means of a threaded member which threadingly engages the threaded part of the bore of the rivet nut, the rivet nut being set in the roof to secure the nut to the roof of the vehicle. Furthermore, the blind rivet nut further secures the sheets of metal, which form the roof, to each other.

For each rivet nut mounted within the roof of the vehicle, a corresponding hole has to be pre-punched into each of the sheets of metal which form the roof of the vehicle. One problem with using pre-punched holes in multiple layers of sheet material is that, due to the limitations of alignment of the various sheets of material which are capable of being achieved during the manufacturing process of a vehicle, the position of the centres of the holes in each sheet have a variation in alignment. Therefore the holes within each sheet have to be formed with an oversized diameter in relation to the diameter of the body of the nut in order to accommodate the tolerances caused by the relative positional discrepancies when the sheets are aligned with each other. By making the holes oversized, they can still accommodate the body of the nut. However, the use of such nuts on the roof of motor vehicles must provide a watertight seal between the underside of the flange of the nut and the surface of the sheet of metal located immediately adjacent the underside of the flange of the rivet nut. This is to prevent the ingress of moisture through the holes formed through the sheets of metal into the motor vehicle which may result in deterioration of the roof of the vehicle. In order to overcome this problem it is common for the flange of the blind rivet nut to have a large diameter to ensure that the flange overlaps the whole of the oversized holes.

Flanges of rivet nuts, due to the material from which they are manufactured, by themselves do not form a watertight seal between the underside of the flange and the surface of the sheet of metal immediately adjacent the flange and therefore a mechanism by which a seal between the flange and the surface of the metal sheet needs to be used. It is known to combine rivet nuts with seals made from plastics materials in order to provide such a sealing capability.

One such arrangement comprises the provision of an O-ring seal groove beneath the flange so that when the blind rivet nut is inserted into the hole formed within a sheet of metal, an O-seal is trapped between the underside of the flange facing the surface of the sheet of material immediately adjacent the flange and the surface of that material. When the blind rivet nut is set, the O-ring is sandwiched between the underside of the flange and the surface of the material to provide a seal. However, this suffers from the disadvantage that the diameter of the flange has to be extremely large in relation to the hole formed in the sheet of metal. The production of large flanges is costly not only in additional material required to form the blind rivet nut but also due to the larger manufacturing machines which in turn have slower production rates. It is therefore desirable to keep the diameter of the flange to an absolute minimum and therefore any added seal arrangement should be located as close to the outer perimeter of the flange as possible.

Another arrangement consists of moulding a seal around the periphery of the flange. However, there are difficulties ensuring that the seal remains firmly attached to the periphery of the flange particularly when the flange nut has been attached to the roof of the vehicle, see e.g. FR-A-2 569 792 (corresponding to the preamble of claim 1).

It is the object of the present invention to provide a blind rivet nut having an integral seal that is formed around the periphery of the flange to prevent the ingress of moisture whilst improving its structural integrity.

Accordingly, there is provided a rivet nut comprising: an elongate body having a longitudinal axis; a flange formed at one end of the body which extends substantially radially outwards from the longitudinal axis of the body; a bore which passes through the flange and through at least a substantial portion of the length of the body and a seal formed from plastics material, moulded around the periphery of the flange; characterised in that the flange comprises at least one indentation formed on the underside of the flange and at least one indentation formed on the top surface of the flange wherein the plastics material of the seal is moulded into the indentations to assist in securing the seal to the flange.

By constructing a rivet nut in this manner, it provides a rivet nut having a seal formed around the periphery of the flange of the rivet nut whilst being firmly attached to the flange. Therefore, the seal remains securely attached whilst operating as a seal during the setting of the rivet nut and during its continued use.

Ideally, there are a plurality of indentations, preferably six, formed on the underside and the top surface of the flange.

Preferably, at least one of the indentations, and ideally all, extend from the periphery of the flange.

One desirable construction of indentation comprises rectangular troughs, the base of the trough being flat and rectangular in shape, the walls being angled slightly so that they taper outwardly slightly from the base to the top surface or underside of the flange. Alternatively, the base of the indentations can comprise a base surface which commences at the top surface or the underside of the flange and slopes at a constant angle into the flange towards the periphery of the flange.

Ideally, the diameter of the flange is between 22.7mm and 23.3mm.

A rib of plastics material can be formed on the underside of the flange adjacent the periphery of the flange and which projects substantially in the same direction as the body of the nut in relation to the flange. This provides a hermetic seal when it is sandwiched between the flange of the rivet nut and the surface of the sheet material to which it has been attached. Furthermore, this design of rib simplifies the manufacture of the rivet nut as it can be integrally moulded with the rest of the seal onto the flange of the rivet nut.

The invention will now be described with reference to the accompanying drawings, of which:
Figure 1 shows a perspective view of the blind rivet nut according to the present invention showing the underside of the flange and the body of the blind rivet nut;
Figure 2 shows an end view of the body of the blind rivet nut and the underside of the flange;
Figure 3 shows a side view of the blind rivet nut; the top half of the figure shows an actual side view; the bottom half of the figure shows a vertical cross-section of the blind rivet nut as indicated by the Arrows A-A in Figure 2;
Figure 4 shows an end view as indicated by the Arrows B-B in Figure 3 in a direction opposite to that shown in Figure 2 and shows the top surface of the flange;
Figure 5 shows a perspective view as shown in Figure 1 but with a seal moulded around the periphery of the flange of the blind rivet nut;
Figure 6 shows the end view as disclosed in Figure 2 with a moulded seal formed around the periphery of the flange of the blind rivet nut;
Figure 7 shows a side view as shown in Figure 3; the top half shows an actual side view; the bottom half shows a vertical cross-section as indicated by the Arrows A-A in Figure 6; with the seal integrally moulded around the periphery of the flange of the blind rivet nut;
Figure 8 shows the end view as shown in Figure 4 in the direction indicated by the Arrows B-B in Figure 7 with the seal integrally moulded around the periphery of the flange of the blind rivet nut; and
Figures 9A and 9B show an alternative design of indentation for the flange of the rivet nut.

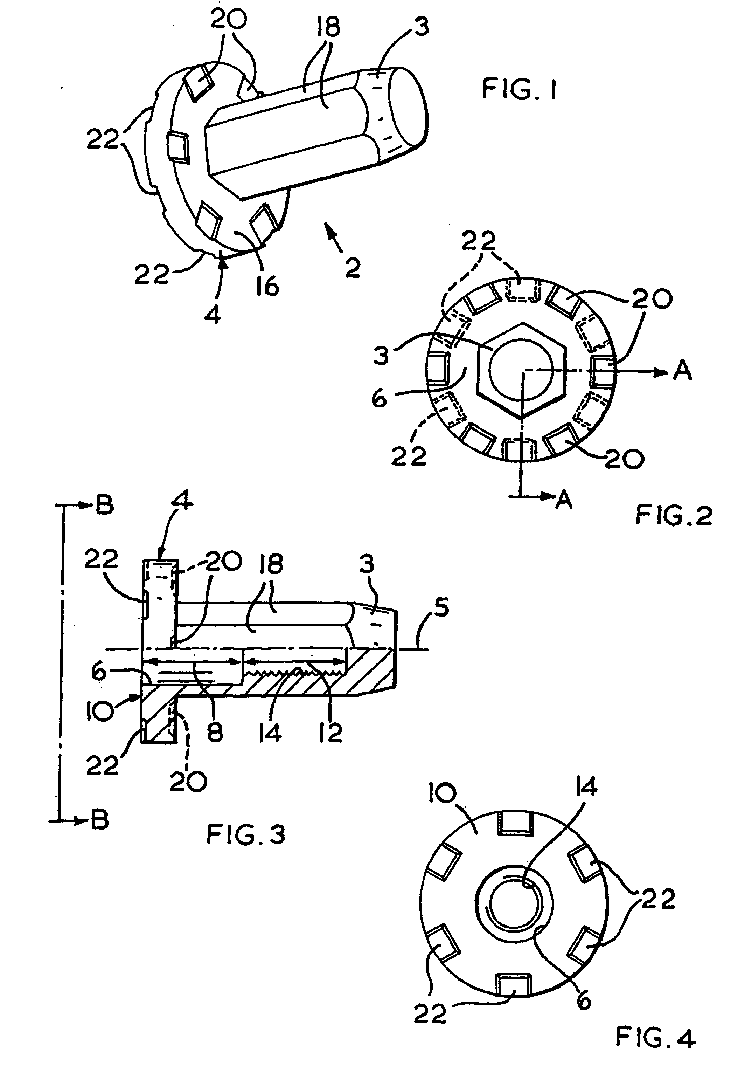

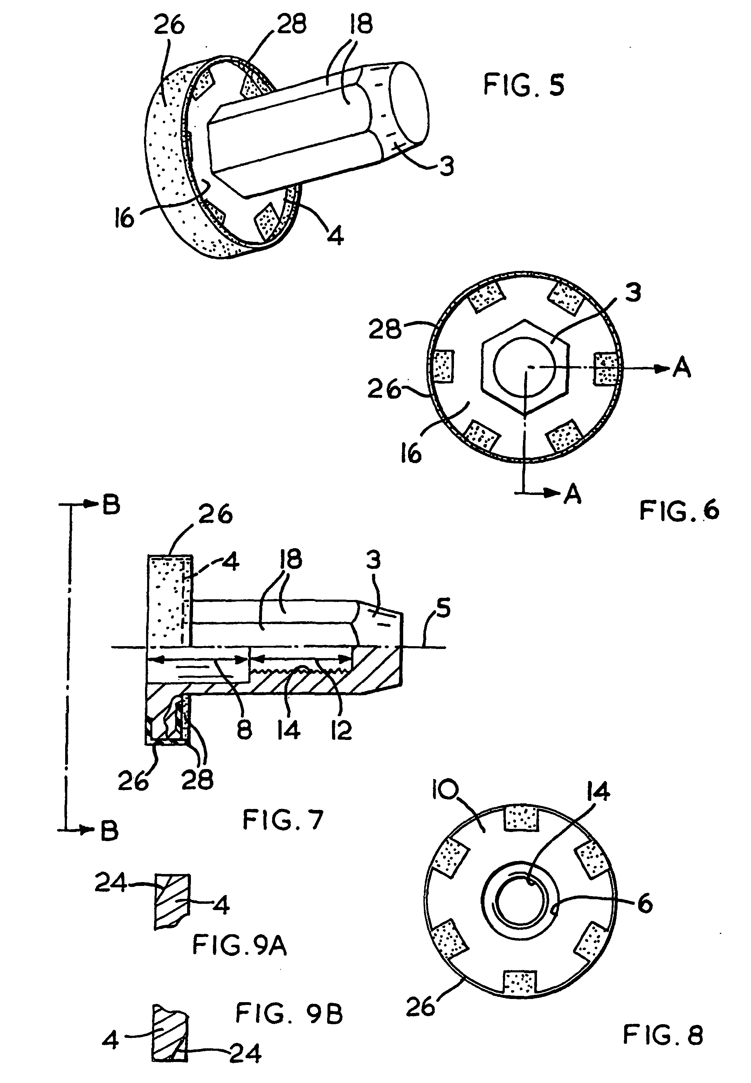

Figures 1 to 4 and Figures 9A and 9B show the blind rivet nut without the seal moulded around the periphery of the flange; Figures 5 to 8 show the blind rivet nut with the seal moulded around the periphery of the flange.

Referring to Figure 1, the blind rivet flange nut comprises an elongate body (2) having a flange (4) formed at one end of the body, and a longitudinal axis (5) which passes through the length of the body (2), the dimensions and the shape of the cross-section of the body (2) of the blind rivet nut being uniform along the length of the body (2) except at the end (3) of the body (2) remote from the flange (4) where it tapers inwardly slightly. The shape of the cross-section of the body (2) is that of a hexagon. This enables the blind rivet nut to be used in relation to similar shaped and dimensioned hexagonal holes formed through sheets of materials so that the body (2) of the nut is prevented from rotating when mounted within the sheets of material. The flange (4) extends radially outwardly in a direction perpendicular to the longitudinal axis (5) of the body (2).

A bore (6) passes through the flange (4) and through the majority of the length of the body (2) as best seen in Figures 3 and 7. The bore (6) comprises a first section (8) co-axial with the longitudinal (5) axis of the body which extends from the top surface (10) of the flange through approximately half of the length of the body (2) and a second section (12) which extends from the end of the first section (8) through the majority of the body, the second section (12) being co-axial with the first section (8) but having a smaller diameter. The second section (12) has a thread (14) formed along its length. The end of the bore (6) remote from the flange is enclosed by the end (3) of the body (2) of the rivet nut. This is commonly referred to as a "blind" rivet nut.

The end (3) of the body (2) away from the flange (4) tapers inwardly slightly in order to enable the blind rivet nut to be easily inserted into a hole formed in a workpiece.

Formed on the underside (16) of the periphery of the flange are six indentations (20) which are formed around the underside (16) of the flange (4) in positions around the longitudinal axis (5) of the body (2) corresponding with each of the flat faces (18) of the hexagonal cross-sectional shape of the body (2) of the blind rivet nut as best seen in Figures 2 and 6. Formed on the top surface (10) of the flange (4) are six similar indentations (22) which are located around the periphery of the flange (4) but are positioned midway between two adjacent indentations (20) formed on the underside (16) of the flange (4).

The shape of the indentations (20;22) is that of a rectangular trough which extends from the periphery of the flange (4) inwardly, the base of the trough being flat and rectangular in shape, the walls being angled slightly so that they taper outwardly from the base to the top surface (10) or underside (16) of the flange (4).

Figure 9 shows an alternative design of indentation which has a base (24) which commences at the top surface (10) as shown in Figure 9A or the underside (16) as shown in Figure 9B and which tapers at a constant angle into the flange towards the periphery of the flange (4).

As shown in Figures 5 to 8, fixed around the periphery of the flange (4) is a plastics material seal (26) which is moulded around the periphery flange of the blind rivet nut by inserting the flange (4) of the blind rivet nut into a specifically designed plastics moulding tool. The plastics material (26) is moulded into the indentations (20;22) formed on both the top surface (10) and the underside (16) of the flange (4) and which locks the plastics material seal to the flange (4) preventing its movement when the blind rivet nut is set and utilised.

Integrally formed by the plastics material seal (26) is a rib (28) which is formed around the periphery of the flange (4) on the underside (16) of the flange (4) and which projects away from the underside (16) of the flange (4) in the same direction as that of the body (2). The surface of the plastics moulding seal (26), excluding the rib (28) is flush with the top and bottom surfaces of the flange (4) thus ensuring that there is face-to-face contact with the underside (16) of the flange (4) of the blind rivet nut and the workpiece to which it is to be attached. The rib (28) provides the mechanism by which the moulded plastics seal forms a hermetic bond between the flange (4) of the rivet nut and the workpiece to which it is attached.

When the blind rivet nut is used, the hexagonal body of the rivet nut is passed through a hexagonal hole formed through a workpiece until the underside (16) of the flange is adjacent to the top surface of the workpiece (not shown). The mandrel (not shown) of a setting tool (not shown) is screwed into the threaded portion of the bore, the nose of the setting tool abutting against the outer surface (16) of the flange (4) in well known manner. The mandrel is pulled in relation to the nose of the setting tool to set the rivet nut by causing the end (3) of the body (2) remote from the flange (4) to move towards the flange (4) causing a radial bulge to be formed on the blind side of the workpiece opposite to that of the flange. As the rivet nut is set, the flange (4) is urged towards the surface of the workpiece squeezing the rib (28) between the underside (16) of the flange and the surface of the workpiece. The flange (4) is held stationary against the surface of the workpiece during the setting of the nut by the nose of the setting tool. The mandrel of the setting tool is then unthreaded from the thread (14) of the bore (6) and removed. During the setting operation of the blind rivet nut, the rib (28) abuts against and is sandwiched between the underside (16) of the flange (4) and the outer surface of the workpiece thus forming the hermetic seal to prevent the ingress of moisture. The plastics material seal (26) moulded around the flange (4) is held securely to the flange (4) due to the plastics material being moulded into the recesses (20;22) formed in the flange.

An object, such as a roof rack can then be attached to the blind rivet nut by screwing a threaded portion of the roof rack into the threaded portion (14) of the bore (6) within the blind rivet nut in well-known manner.

## Claims

1. A rivet nut comprising:
an elongate body (2) having a longitudinal axis (5);
a flange (4) formed at one end of the body (2) which extends substantially radially outwards from the longitudinal axis (5) of the body (2);
a bore (6) which passes through the flange and through at least a substantial portion of the length of the body (2) and a seal (26) formed from plastics material, moulded around the periphery of the flange (4);
**characterised in that** the flange (4) comprises at least one indentation (20) formed on the underside (16) of the flange (4) and at least one indentation (22) formed on the top surface (10) of the flange (4) wherein the plastics material of the seal (26) is moulded into the indentations (20;22) to assist in securing the seal (26) to the flange (4).

2. A rivet nut as claimed in claim 1, wherein the rivet nut is a blind rivet nut.

3. A rivet nut as claimed in either of claims 1 or 2, wherein there are a plurality of indentations formed on the underside (16) of the flange (4).

4. A rivet nut as claimed in any one of the previous claims, wherein there are a plurality of indentations (22) formed on the top surface (10) of the flange (4).

5. A rivet nut as claimed in any one of the previous claims, wherein at least one of the indentations (20;22) extends from the periphery of the flange.

6. A rivet nut as claimed in any one of the previous claims, wherein all the indentations (20) formed on the underside (16) of the flange (4) extend from the periphery of the flange(4).

7. A rivet nut as claimed in any one of the previous claims, wherein all the indentations (22) formed on the top surface (10) extend from the periphery of the flange (4).

8. A rivet nut as claimed in any one of the previous claims, wherein the indentations (20;22) are rectangular troughs, the base of the trough being flat and rectangular in shape, the walls being angled slightly so that they taper outwardly slightly from the base to the top surface (10) or underside (16) of the flange (4).

9. A rivet nut as claimed in any one of claims 1 to 7, wherein the base of the indentations comprises a base surface (24) which commences at the top surface (10) or the underside (16) of the flange (4) and slopes at a constant angle into the flange towards the periphery of the flange (4).

10. A rivet nut as claimed in any one of the previous claims, wherein the bore (6) comprises a threaded portion (14).

11. A rivet nut as claimed in any one of the previous claims, wherein the bore comprises two sections, a first section which extends from the top surface of the flange through at least part of the length of the body of the rivet nut and a second section of smaller diameter than the first section which extends from the end of the first section through substantially the rest of the body.

12. A rivet nut as claimed in claim 9, wherein the first and second sections are substantially co-axial.

13. A rivet nut as claimed in either of claims 11 or 12, wherein the second section of the bore is threaded.

14. A rivet nut as claimed in any one of the previous claims, wherein the shape of the cross section of the body of the rivet nut is hexagonal.

15. A rivet nut as claimed in any one of the previous claims, wherein the diameter of the flange is between 22.7mm and 23.3mm.

16. A rivet nut as claimed in any one of the previous claims, wherein a rib (28) of plastics material is formed on the underside (16) of the flange (4) adjacent the periphery of the flange (4) and which projects substantially in the same direction as the body (2) of the nut in relation to the flange (4).

## Patentansprüche

1. Nietmutter, umfassend:
einen länglichen Körper (2) mit einer Längsachse (5);
einen an einem Ende des Körpers (2) ausgebildeten Flansch (4), der sich von der Längsachse (5) des Körpers (2) im wesentlichen radial nach außen erstreckt;
eine sich durch den Flansch und durch wenigstens einen wesentlichen Teil der Länge des Körpers (2) erstreckende Bohrung (6) sowie eine aus Kunststoff gefertigte Dichtung (26), die um den Umfang des Flansches (4)angeformt ist;
**dadurch gekennzeichnet, dass** der Flansch (4) wenigstens eine Vertiefung (20) auf der Unterseite (16) des Flansches (4) und wenigstens eine Vertiefung (22) auf der Oberseite (10) des Flansches (4) aufweist, wobei das Kunststoffmaterial der Dichtung (26) zur Unterstützung der Halterung der Dichtung (26) an dem Flansch (4) in die Vertiefungen (20; 22) eingeformt ist.

2. Nietmutter nach Anspruch 1, wobei die Nietmutter eine Blindnietmutter ist.

3. Nietmutter nach einem der Ansprüche 1 oder 2, wobei auf der Unterseite (16) des Flansches (4) eine Vielzahl von Vertiefungen ausgebildet sind.

4. Nietmutter nach einem der vorhergehenden Ansprüche, wobei auf der Oberseite (10) des Flansches (4) eine Vielzahl von Vertiefungen (22) ausgebildet sind.

5. Nietmutter nach einem der vorhergehenden Ansprüche, wobei sich wenigstens eine der Vertiefungen (20; 22) von dem Umfang des Flansches erstreckt.

6. Nietmutter nach einem der vorhergehenden Ansprüche, wobei sich alle auf der Unterseite (16) des Flansches (4) ausgebildeten Vertiefungen (20) von dem Umfang des Flansches (4) erstrecken.

7. Nietmutter nach einem der vorhergehenden Ansprüche, wobei sich alle auf der Oberseite (10) ausgebildeten Vertiefungen (22) von dem Umfang des Flansches (4) erstrecken.

8. Nietmutter nach einem der vorhergehenden Ansprüche, wobei die Vertiefungen (20; 22) aus rechteckigen Mulden bestehen, wobei der Boden der Mulde flach und rechteckförmig ausgebildet ist und die Wände leicht abgewinkelt sind, so dass sie sich von dem Boden zur Oberseite (10) oder Unterseite (16) des Flansches (4) leicht nach außen verjüngen.

9. Nietmutter nach einem der Ansprüche 1 bis 7, wobei der Boden der Vertiefungen eine Bodenfläche (24) aufweist, die auf der Oberseite (10) oder auf der Unterseite (16) des Flansches (4) beginnt und in Richtung auf den Umfang des Flansches (4) in einem konstanten Neigungswinkel in den Flansch übergeht.

10. Nietmutter nach einem der vorhergehenden Ansprüche, wobei die Bohrung (6) einen Gewindeabschnitt (14) aufweist.

11. Nietmutter nach einem der vorhergehenden Ansprüche, wobei die Bohrung (6) aus zwei Abschnitten besteht, einem ersten Abschnitt, der sich von der Oberseite des Flansches durch wenigsten einen Teil der Länge des Körpers der Nietmutter erstreckt, und einem zweiten Abschnitt von kleinerem Durchmesser als dem des ersten Abschnitts, der sich von dem Ende des ersten Abschnitts im wesentlichen durch den übrigen Teil des Körpers erstreckt.

12. Nietmutter nach Anspruch 9, wobei die ersten und zweiten Abschnitte im wesentlichen koaxial angeordnet sind.

13. Nietmutter nach einem der Ansprüche 11 oder 12, wobei der zweite Abschnitt der Bohrung ein Gewinde aufweist.

14. Nietmutter nach einem der vorhergehenden Ansprüche, wobei die Querschnittsform des Körpers der Nietmutter sechseckig ist.

15. Nietmutter nach einem der vorhergehenden Ansprüche, wobei der Durchmesser des Flansches zwischen 22,7 mm und 23,3 mm beträgt.

16. Nietmutter nach einem der vorhergehenden Ansprüche, wobei eine Rippe (28) aus Kunststoff auf der Unterseite (16) des Flansches (4) dem Umfang des Flansches (4) benachbart ausgebildet ist und sich im wesentlichen in die gleiche Richtung wie der Körper (2) der Mutter relativ zu dem Flansch (4) erstreckt.

## Revendications

1. Ecrou à rivet comprenant :
un corps allongé (2) ayant un axe longitudinal (5) ;
un rebord (4) formé au niveau d'une extrémité du corps (2) qui s'étend sensiblement radialement vers l'extérieur à partir de l'axe longitudinal (5) du corps (2) ;
un alésage (6) qui passe à travers le rebord et suivant au moins une partie substantielle de la longueur du corps (2) et un joint (26) formé à partir de matière plastique, moulé autour de la périphérie du rebord (4) ;
**caractérisé en ce que** le rebord (4) comprend au moins une indentation (20) formée sur la face inférieure (16) du rebord (4) et au moins une indentation (22) formée sur la surface supérieure (10) du rebord (4) dans lequel la matière plastique du joint (26) est moulée dans les indentations (20 ; 22) pour aider à fixer le joint (26) au rebord (4).

2. Ecrou à rivet selon la revendication 1, dans lequel l'écrou à rivet est un écrou à rivet aveugle.

3. Ecrou à rivet selon les revendications 1 ou 2, dans lequel il existe une pluralité d'indentations formées sur la face inférieure (16) du rebord (4).

4. Ecrou à rivet selon l'une quelconque des revendications précédentes, dans lequel il existe une pluralité d'indentations (22) formées sur la surface supérieure (10) du rebord (4).

5. Ecrou à rivet selon l'une quelconque des revendications précédentes, dans lequel au moins l'une des indentations (20 ; 22) s'étend à partir de la périphérie du rebord.

6. Ecrou à rivet selon l'une quelconque des revendications précédentes, dans lequel toutes les indentations (20) formées sur la face inférieure (16) du rebord (4) s'étendent au partir de la périphérie du rebord (4).

7. Ecrou à rivet selon l'une quelconque des revendications précédentes, dans lequel toutes les indentations (22) formées sur la surface supérieure (10) s'étendent à partir de la périphérie du rebord (4).

8. Ecrou à rivet selon l'une quelconque des revendications précédentes, dans lequel les indentations (20 ; 22) sont des cavités rectangulaires, la base de lka cavité étant plate et de forme rectangulaire, les parois étant inclinées légèrement de sorte qu'elles s'évasent progressivement vers l'extérieur légèrement de la base vers la surface supérieure (10) ou la face inférieure (6) du rebord (4).

9. Ecrou à rivet selon l'une quelconque des revendications 1 à 7, dans lequel la base des indentations comprend une surface de base (24) qui commence au niveau de la surface supérieure (10) ou le face inférieure (16) du rebord (4) et qui est inclinée d'un angle constant à l'intérieur du rebord vers la périphérie du rebord (4).

10. Ecrou à rivet selon l'une quelconque des revendications précédentes, dans lequel l'alésage (6) comprend une partie filetée (14).

11. Ecrou à rivet selon l'une quelconque des revendications précédentes, dans lequel l'alésage comprend deux sections, une première section qui s'étend à partir de la surface supérieure du rebord à travers au moins une partie de la longueur du corps de l'écrou à rivet et une seconde section de plus petit diamètre que la première section, qui s'étend à partir de l'extrémité de la première section sensiblement à travers le reste du corps.

12. Ecrou à rivet selon la revendication 9, dans lequel les première et seconde sections sont sensiblement coaxiales.

13. Ecrou à rivet selon les revendications 11 ou 12, dans lequel la seconde section de l'alésage est filetée.

14. Ecrou à rivet selon l'une quelconque des revendications précédentes, dans lequel la forme de la section transversale du corps de l'écrou à rivet est hexagonale.

15. Ecrou à rivet selon l'une quelconque des revendications précédentes, dans lequel le diamètre du rebord est compris entre 22,7 mm et 23,3 mm.

16. Ecrou à rivet selon l'une quelconque des revendications précédentes, dans lequel une nervure (28) de matière plastique est formée sur la face inférieure (16) du rebord (4), adjacente à la périphérie du rebord (4) et qui fait saillie sensiblement dans la même direction que le corps (2) de l'écrou par rapport au rebord (4).
